# EUROPÄISCHE PATENTSCHRIFT

(11) **EP 0 508 322 B1**
(45) Veröffentlichungstag und Bekanntmachung des Hinweises auf die Patenterteilung: **15.11.1995**
(21) Anmeldenummer: 92105793.1
(22) Anmeldetag: 03.04.1992
(51) Int. Cl.: H02G 15/08, H02G 15/24

(54) **Übergangsmuffe**
Cable junction sleeve
Manchon pour jonction de câbles

(30) Priorität: 08.04.1991 DE 4111234
(43) Veröffentlichungstag der Anmeldung: 14.10.1992
(73) Patentinhaber: ABB PATENT GmbH, 68309 Mannheim (DE)
(72) Erfinder: Kurz, Adolf, W-6836 Oftersheim (DE); Fenske, Dietmar, W-6800 Mannheim 61 (DE); Leonhardt, Gottfried, W-6836 Oftersheim (DE)
(74) Vertreter: Rupprecht, Klaus, Dipl.-Ing.

(56) Entgegenhaltungen:
- DE-A- 2 456 471
- DE-A- 2 601 545
- DE-A- 3 437 481
- DE-A- 3 910 833
- DE-C- 2 733 815
- DE-C- 2 937 058
- FR-A- 2 360 201
- FR-A- 2 557 390
- US-A- 3 878 313
- US-A- 4 740 653

## Beschreibung

Die Erfindung betrifft eine Übergangsmuffe der im Oberbegriff des Anspruches 1 genannten Art.

Der wachsende Einsatz von kunststoff-isolierten Kabeln in Verteilungsnetzen führt in zunehmendem Maße dazu, daß bei Neuverlegungen Kunststoffkabel in bestehende Massekabelnetze eingebunden werden müssen. In solchen Fällen ist der Einsatz von Übergangsmuffen erforderlich, die dem unterschiedlichen Aufbau der zu verbindenden Kabel gerecht werden. Die sogenannte "nasse" Muffe stellt prinzipiell eine Massekabelmuffe dar, bei der das Kunststoffkabel mit ölbeständigem Band dichtgewickelt und die Muffe anschließend wie eine Massekabelmuffe mit getränkten Isolierpapieren hergestellt wird.

Ein Massereservoir in der Übergangsmuffe gewährleistet die Masseversorgung des Massekabels im Muffennahbereich. Ein auf der Isolierung des Kunststoffkabels aufgebrachter ölbeständiger Wickel dichtet die Kunststoffkabelseite gegen die Tränkmasse in der Innenmuffe ab. Durch Sacklochbohrungen im Verbinder wird der Massefluß in den Leitern unterbunden. Die Einzeladern sind durch Wickelkeulen aus Kreppapier und eine Gürtelbandage elektrisch isoliert und mechanisch fixiert.

Zur Abdichtung des in der Regel rohrförmigen Muffenmantels werden hauptsächlich gelötete Konstruktionen in Form einer sogenannten Schmierplombe eingesetzt. Außer diesen Dichtungen sind noch Gummidichtungen mit Federpaketen bekannt, wie sie z.B. im Catalogue part 2 von Kabeldon "Cable terminations and joints 12 bis 36 kV", April 1990, auf den Seiten 2:38 und 2:39 dargestellt sind. Hierbei wird ein zwischen zwei Preßringen liegender gummielastischer Dichtungsring über das Kabel bis in den Muffenmantel hineingeschoben und durch Zusammenpressen der beiden Preßringe so verformt, daß die verursachte Materialverdrängung einen abdichtenden Druck sowohl auf die Innenseite des Muffenmantels als auch auf die Außenseite des Kabels bewirkt.

Übergangsmuffen mit Schmierplomben als Abdichtung haben den Nachteil, daß speziell geschultes Personal für die Montage eingesetzt werden muß. Außerdem ist das Löten sehr zeitaufwendig. Für Gummidichtungen der beschriebenen Art werden sehr viele Einzelteile benötigt, was entsprechende Montagezeiten verursacht und sich im Materialpreis niederschlägt. Besonders aufwendig ist das Erstellen der Wickelkeulen im Bereich der Kabelverbinder.

Aus der DE-A-3 910 833 ist ein Übergangsendverschluß für Mittelspannungskabel bekannt, bei dem innerhalb eines Endverschlußgehäuses für ein papierisoliertes Dreileiterkabel eine Verbindung mit kunststoffisolierten Leitungen hergestellt wird. Ein die Leitungen verbindender Kabelverbinder ist von einer Isolierkeule umgeben, die einen ringförmigen Dichtwulst aufweist, der mit einer Stopfbrille eine Abdichtung im Bereich eines zum Endverschlußgehäuse gehörigen Deckels bewirkt. Zur einseitigen Abdichtung bedarf es somit mehrerer Teile und auf der anderen Seite des Übergangsendverschlusses erfolgt die Abdichtung durch eine Lötung.

Aufgabe der Erfindung ist es, eine Übergangsmuffe der im Oberbegriff des Anspruches 1 genannten Art zu schaffen, bei der das Aufbringen der Isolation im Bereich des Kabelpreßverbinders erleichtert und gleichzeitig eine einfache Montage der Dichtungsteile erreicht wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Ein wesentlicher Vorteil der Erfindung ist zunächst einmal, daß die üblicherweise benötigte, aufwendig herzustellende Wickelkeule durch einen rohrförmigen, auf den Kabelverbinder aufschiebbaren, vorgefertigten Isolirkörper ersetzt wird. Weiterhin gelingt es durch die besondere Ausbildung des Isolierkörpers und seine gummielastische Flexibilität das Massereservoir sowohl gegenüber dem Kunststoffkabel als auch nach außen hin abzudichten. Auch am anderen Ende der Übergangsmuffe dient ein vorgefertigtes Dichtungsteil aus elastomerem Material zur Abdichtung des Massereservoirs. Die in die Dichtungsteile eingegossenen Halteringe ermöglichen eine schnelle und sichere Befestigung am Muffenmantel.

Die Muffe verbindet somit die Vorteile der Aufschiebtechnik, wie sie im Bereich der Kunststoffkabelgarnituren bekannt sind, mit den Erfordernissen einer Massekabelgarnitur, bei der ein Nachtränken der Kabelader notwendig ist.

Eine zweckmäßige Weiterbildung des aus elastomerem Material bestehenden rohrförmigen Isolierkörpers sieht vor, daß sein Innendurchmesser kleiner als der Außendurchmesser der Isolierung des Massekabels auf der einen Seite und des Kunststoffkabels auf der anderen Seite ist, wodurch Hohlräume vermieden und damit eine ausreichende elektrische Festigkeit gewährleistet wird. Beim Aufschieben erfolgt eine Spreizung, die bewirkt, daß der Isolierkörper auch den Kabeiverbinder im Preßsitz umschließt und dadurch für eine sichere Abdichtung zum Kunststoffkabel hin sorgt.

Zweckmäßigerweise dient als Kabelverbinder zum Verbinden der Leiter der beiden Kabel ein erster Preßverbinder, der mit Sacklochbohrungen versehen ist und einen Preßverbindersteg besitzt, dessen Außendurchmesser größer ist als der des übrigen Preßverbinders, so daß an dieser Stelle ein erhöhter Druck auf den Isolierkörper ausgeübt wird und sich dadurch die Abdichtung weiter verbessert.

Eine weitere wesentliche Verbesserung wird dadurch erzielt, daß eine zur Glättung der Oberfläche des Preßverbinders über diesen zu schiebende Glättungselektrode unmittelbar in den Isolierkörper integriert ist, so daß keine getrennte Montage erforderlich wird. An seinem kabelseitigen Ende ebenfalls in den Isolierkörper integriert, ist ein Steuertrichter, der mit der äußeren Leitschicht des Kabels kontaktiert ist.

Um eine ausreichende Tränkung des Massekabels sicherzustellen, endet der Isolierkörper zum Massekabel hin auf der freigelegten Papierisolierung etwa in der Mitte zwischen einer ersten Absetzkante einer Feldbegrenzung des Massekabels und einer am Ende der Papierisolierung des Massekabels gebildeten zweiten Absetzkante. Weiterhin ist das Ende des Isolierkörpers konisch abgeschrägt, wodurch das Aufbringen eines Papierwickels sehr erleichtert wird. So kann ein Wickelpapier in vorgegebener Breite, vorzugsweise zwischen 20 mm und 100 mm, Lage auf Lage unmittelbar gegen das Ende des konisch abgeschrägten Isolierkörpers gewickelt werden. Dies ist selbstverständlich wesentlich einfacher und auch zeitsparender als die Erstellung einer Wickelkeule.

Eine vorteilhafte Weiterbildung der Erfindung sieht weiterhin vor, daß der Außendurchmesser des Isolierkörpers bis zu einer Dichtlippe wesentlich kleiner als der Innendurchmesser des Muffenmantels ist. So kann sich das Massereservoir bis in diesen Bereich erstrecken und eine äußere Feldbegrenzung vom Metallmantel des Massekabels bis unter die Dichtlippe des Isolierkörpers geführt werden.

Der Muffenmantel wird zweckmäßigerweise durch ein Metallrohr, vorzugsweise aus Kupfer gebildet, und besitzt im Bereich des Massereservoirs eine Einfüllöffnung für die Masse.

Ohne Potentialtrennung wird das Erdpotential vom Metallmantel des Massekabels über eine erste Flachlitze mit dem Muffenmantel verbunden und von diesem über eine zweite Flachlitze zu einem zweiten Preßverbinder geführt und an die Schirmdrähte des Kunststoffkabels angeschlossen. Bei Potentialtrennung wird die zweite Flachlitze durch einen dritten Preßverbinder mit einer ersten isolierten Erdungslitze und die Schirmdrähte durch einen vierten Preßverbinder mit einer zweiten isolierten Erdungslitze verbunden. Die beiden Erdungslitzen können zu einem Erdungskasten geführt werden, wo dann das Erdpotential bei Bedarf durchverbunden oder zur Mantelprüfung getrennt werden kann.

Das zur Dichtung dienende Isolierteil ist auf das Massekabel aufschiebbar. Zum Massereservoir hin besitzt das Dichtungsteil zwei, vorzugsweise V-förmig zueinander angeordnete Dichtlippen, von denen eine äußere Dichtlippe auf der Innenseite des Muffenmantels und eine innere Dichtlippe auf dem Metallmantel des Massekabels anliegt. Nach außen, zum Muffenende zu, ist das Dichtungsteil konisch abgeschrägt.

Die Abdichtung im Bereich des Metallmantels des Massekabels wird maßgeblich dadurch verbessert, daß der Innendurchmesser des Dichtungsteils kleiner als der Außendurchmesser des Metallmantels dimensioniert wird. Der zur Befestigung des Dichtungsteils einerseits und des Isolierkörpers andererseits am Muffenmantel dienende formstabile Haltering kann aus Metall bestehen und durch Schrauben mit dem Muffenmantel verbunden werden.

Um eine geeignete Flexibilität der beiden dichtenden Teile zu erreichen, werden diese aus einem elastomeren Material eine Shore-A-Härte zwischen 25 und 55 hergestellt. Hierzu verwendet man üblicherweise einen entsprechenden Silikonkautschuk. Die Dehnung der Teile, insbesondere des Isolierkörpers, wird so dimensioniert, daß sie zwischen 5 und 30 % liegt.

Der Muffenmantel, der freiliegende Bereich der beiden Dichtungsteile und die Anschlußenden der beiden zu verbindenden Kabel werden vorzugsweise mit einem Schrumpfschlauch abgedeckt. Zur Verbindung von mehradrigen Kabeln, insbesondere Dreileiterkabeln wird jede der Kabeladern mit einer Verbindungsmuffe versehen, wie sie vorstehend beschrieben wurde.

Ein Ausführungsbeispiel der Erfindung wird im folgenden näher beschrieben und ist in den Zeichnungen dargestellt.

Es zeigen:
- Fig. 1: eine teilweise aufgeschnittene Muffe in Seitenansicht mit den beiden Anschlußenden der zu verbindenden Kabel,
- Fig. 2: das Herausführen von zwei Erdungslitzen aus der Muffe bei Potentialtrennung,
- Fig. 3: das Einführen von drei Adern eines mehradrigen Kabels in drei ihnen zugeordnete Übergangsmuffen.

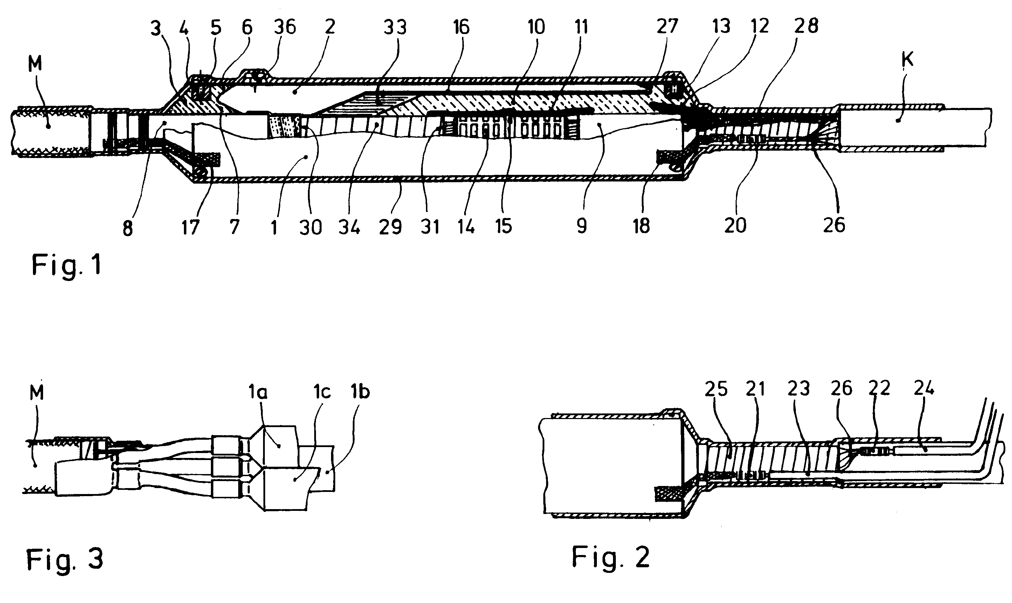

Wie Fig. 1 zeigt, dient eine Übergangsmuffe mit einem Muffenmantel 1 zum Verbinden eines Massekabels M mit einem Kunststoffkabel K. Die bis auf den Leiter abisolierten Kabel werden innerhalb des Muffenmantels 1 durch einen ersten Preßverbinder 14 elektrisch und mechanisch verbunden. Die Abdichtung des als Kupferrohr ausgebildeten Muffenmantels 1 auf der Massekabelseite wird mit einem Dichtungsteil 3 erreicht. Hierzu wird das Dichtungsteil 3 auf den Metallmantel 8 des Massekabels geschoben. Auf der Seite des Kunststoffkabels K wird ein ebenfalls eine Abdichtung bewirkender Isolierkörper 10 über den ersten Preßverbinder 14 hinweg aufgeschoben. Zwischen dem Dichtungsteil 3 und dem Isolierkörper 10 verbleibt ein Hohlraum, der als Massereservoir 2 zur Aufnahme von Masse für die Tränkung des Massekabels M dient. Für das Einfüllen der Masse ist eine Einfüllöffnung 36 im Muffenmantel 1 vorgesehen.

Auf seiner dem Massereservoir 2 zugewandten Innenseite besitzt das Dichtungsteil 3 zwei Dichtlippen 6,7, von denen eine äußere Dichtlippe 6 auf der Innenseite des Muffenmantels und eine innere Dichtlippe 7 auf dem Metallmantel 8 des Massekabels M anliegt. Durch die Formgebung der angegossenen Dichtlippen 6,7, die im Querschnitt zusammen einem V entsprechen, das sich zum Massereservoir 2 hin öffnet, wird erreicht, daß ein von der Masse ausgeübter Innendruck, die Dichtlippen 6,7 in radialer Richtung gegen ihre Auflage drückt. Hierdurch wird eine zuverlässige Dichtwirkung erzielt.

Um ein Verschieben des Dichtungsteiles 3 auf dem Metallmantel 8 bzw. gegenüber dem Muffenmantel 1 zu verhindern, ist ein erster Haltering 4 in das Dichtungsteil 3 eingegossen und vorzugsweise mit Schrauben 5 am Muffenmantel 1 angeschraubt. Eine durch steigenden Innendruck in axialer Richtung wirkende Kraftkomponente drückt das Dichtungsteil 3 gegen den aus Aluminium hergestellten ersten Haltering 4, der durch seine Fixierung ein Verschieben verhindert. Zur Außenseite hin ist das Dichtungsteil 3 konisch abgeschrägt.

Der Isolierkörper 10 ersetzt weitgehend die bisher übliche Wickelkeule für die elektrische Isolierung des Preßverbinders 14. In den vorzugsweise aus Silikonkautschuk bestehenden Isolierkörper 10 sind eine aus leitfähigem Silikonmaterial bestehende Glättungselektrode 11 und ein Steuertrichter 12 sowie ein zur Fixierung des Isolierkörpers 10 am Muffenmantel 1 benötigter zweiter Haltering 13 mit eingegossen. Der Isolierkörper 10 vereinigt somit mehrere Teile und läßt sich bei der Montage leicht aufschieben. Hierdurch wird die Montagezeit entscheidend verkürzt.

Der Preßverbinder 14 ist in seiner Mitte mit einem Preßverbindersteg 15 versehen, auf dem die Glättungselektrode 11 mit Vorspannung aufliegt und dadurch die Masse gegenüber dem Kunststoffkabel K abdichtet. Steigt der Druck der Masse an, wird durch die radiale Kraftkomponente auf den Isolierkörper 10 der Druck auf den Preßverbindersteg 15 erhöht und somit eine Massewanderung entlang dem Preßverbinder 14 zum Kunststoffkabel K hin sicher verhindert.

Analog zum Dichtungsteil 3 auf der Massekabelseite ist der Isolierkörper 10 auf der Kunststoffkabelseite mit einer der äußeren Dichtlippe 6 entsprechenden Isolierkörperdichtlippe 27 versehen, die ebenfalls so geformt ist, daß sie bei steigendem Innendruck radial an die Innenseite des Muffenmantels 1 gepreßt wird.

Der Isolierkörper 10 endet auf der freigelegten Aderisolierung etwa in der Mitte zwischen einer zweiten Absetzkante 31 der Isolierung und einer ersten Absetzkante 30 der äußeren Feldbegrenzung des Massekabels M. Somit bleibt zwischen der ersten Absetzkante 30 und dem Isolierkörper 10 ein Sickerbereich frei, der ein Nachtränken der Papierisolierung 34 des Massekabels M ermöglicht.

Das Ende des Isolierteils 10 ist so angeschrägt, daß mit einem Wickelpapier einer Breite zwischen 20 mm und 100 mm durch einfaches Anwickeln ein zur Steuerung des elektrischen Feldes an der Absetzkante der äußeren Feldbegrenzung ein Papierwickel 33 mit geeignetem Konus entsteht. Zur äußeren Feldbegrenzung 16 dient vorzugsweise leitfähiges Kreppapier, das ausgehend vom Metallmantel 8 des Massekabels M über den Papierwickel 33 bis zur Isolierkörperdichtlippe 27 gewickelt wird.

Die beiden Dichtungselemente 3,10 sind aus elastomerem Material, vorzugsweise aus Silikonkautschuk einer Shore-A-Härte zwischen 25 bis 55 hergestellt. Der Durchmesser der Innenbohrung des Dichtungsteils 3 ist kleiner als der Durchmesser der Kabelader über dem Metallmantel. Aufgrund dieser Durchmesserdifferenz übt der elastomere Körper einen dauerhaften radialen Druck auf den Metallmantel aus. Die Durchmesserdifferenz ist so gewählt, daß die Dehnung des Abdichtelementes zwischen 5 und 30 % liegt.

Sofern keine Potentialtrennung zwischen den beiden Kabeln vorgesehen ist, wird das Erdpotential vom Metallmantel 8 über eine erste Flachlitze 17 mit dem Muffenmantel 1 verbunden, der wiederum über eine zweite Flachlitze 18 und einen zweiten Preßverbinder 20 zu den Schirmdrähten 26 des Kunststoffkabels K durchverbunden ist.

Fig. 2 zeigt eine Übergangsmuffe mit Potentialtrennung. Hier wird das Erdpotential des Massekabels vom Metallmantel 8 über die erste Erdungslitze 17, den Muffenmantel 1, die zweite Erdungslitze 18, einen dritten Preßverbinder 21 zu einer ersten isolierten Erdungslitze 23 und mit dieser nach außen geführt. Das Erdpotential der Kunststoffkabelseite wird von Schirmdrähten 26 über einen vierten Preßverbinder 22 und eine zweite isolierte Erdungslitze 24 ebenfalls nach außen geführt. Im Erdungskasten kann dann das Erdpotential durchverbunden und bei Mantelprüfungen der Kabel getrennt werden. Die Potentialtrennung erfolgt innerhalb der Muffe, in der die aus leitfähigem Kreppapier bestehende äußere Feldbegrenzung 16 unter der Isolierkörperdichtlippe 27 endet. Das Potential des Massekabels reicht also bis zum Muffenmantel 1 und unter die Dichtlippe 27. Die Trennung wird durch den Isolierkörper 10 und die Bewicklung aus Isolierband 25 auf der festverschweißten Leitschicht 28 des Kunststoffkabels K erreicht. Über die Muffe und die beiden Anschlußenden der Kabel M,K ist ein Schrumpfschlauch 29 gezogen, der die Anordnung schützt.

Fig. 3 zeigt die Zuführung eines dreiadrigen Massekabels M zu drei jeweils einer Ader zugeordneten Muffen 1a,1b,1c, die auf ihrer anderen nicht dargestellten Seite wiederum mit drei Adern eines Kunststoffkabels verbunden sind.

## Patentansprüche

1. Übergangsmuffe zur Verbindung eines Massekabels (M) mit einem Kunststoffkabel (K), bei der ein Muffenmantel (1) mindestens einen entsprechend isolierten Kabelverbinder (14) und ein Massereservoir (2) für das Massekabel (M) aufnimmt und ein aus elastomerem Material bestehender, rohrförmiger, auf den Kabelverbinder (14) aufschiebbarer, vorgefertigter Isolierkörper (10) das Kunststoffkabel (K) gegenüber dem Massereservoir (2) abdichtet und mit einer angeformten Isolierkörperdichtung (27) an einem Muffenende für eine Abdichtung zur Außenseite sorgt, dadurch gekennzeichnet, daß am anderen Muffenende ebenfalls ein vorgefertigtes, auf das Massekabel (M) aufschiebbares, elastomeres Dichtungsteil (3) vorgesehen ist und in das Dichtungsteil (3) ein erster formstabiler Haltering (4) und in den Isolierkörper (10) ein zweiter formstabiler Haltering (13) eingegossen ist und die Halteringe (4, 13) eine Befestigung der Teile (3, 10) am Muffenmantel (1) ermöglichen.

2. Übergangsmuffe nach Anspruch 1, dadurch gekennzeichnet, daß der aus elastomerem Material bestehende Isolierkörper (10) einen Innendurchmesser besitzt, der jeweils kleiner als der Außendurchmesser der Isolierung des Massekabels (M) auf der einen und des Kunststoffkabels (K) auf der anderen Seite ist.

3. Übergangsmuffe nach Anspruch 1 oder 2, dadurch gekennzeichnet, daß der Isolierkörper (10) durch Spreizung seines untermaßigen Innendurchmessers den Kabelverbinder (14) im Preßsitz umschließt und mit mindestens einer Dichtlippe (27) am Muffenmantel (1) anliegt.

4. Übergangsmuffe nach einem der vorhergehenden Ansprüche, dadurch gekennzeichnet, daß als Kabelverbinder zum Verbinden der Leiter der beiden Kabel (M,K) ein erster Preßverbinder (14), vorzugsweise mit Sacklochbohrung, dient, der mit einem seinen Außendurchmesser soweit vergrößerenden Preßverbindersteg (15) versehen ist, daß dieser eine verstärkte Abdichtung am Isolierkörper (10) bewirkt.

5. Übergangsmuffe nach einem der vorhergehenden Ansprüche, dadurch gekennzeichnet, daß in den Isolierkörper (10) eine aus leitfähigem Material bestehende Glättungselektrode (11) und vorzugsweise auch ein Steuertrichter (12) integriert ist, und die Glättungselektrode (11) auf den Enden der Isolierung (9,34) der beiden Kabeladern aufliegend, den ersten Preßverbinder (14) abdeckend kontaktiert.

6. Übergangsmuffe nach einem der vorhergehenden Ansprüche, dadurch gekennzeichnet, daß der Isolierkörper (10) zum Massekabel (M) hin auf der freigelegten Papierisolierung (34) etwa in der Mitte zwischen einer ersten Absetzkante (30) einer Feldbegrenzung (16) des Massekabels (M) und einer am Ende der Papierisolierung (34) des Massekabels (M) gebildeten zweiten Absetzkante (31) endet und zwischen der ersten Absetzkante (30) und dem Isolierkörper (10) der Sickerbereich zum Nachtränken liegt.

7. Übergangsmuffe nach einem der vorhergehenden Ansprüche, dadurch gekennzeichnet, daß das Ende des Isolierkörpers (10) konisch abgeschrägt ist und durch Anwickeln eines Papierwickels (33), vorzugsweise in einer Breite zwischen 20 mm und 100 mm, ein entsprechender Konus entsteht.

8. Übergangsmuffe nach einem der vorhergehenden Ansprüche, dadurch gekennzeichnet, daß der Außendurchmesser des Isolierkörpers (10) bis zu seiner Dichtlippe (27) wesentlich kleiner als der Innendurchmesser des Muffenmantels (1) ist, so daß sich das Massereservoir (2) bis in diesen Bereich erstrecken kann und daß eine äußere Feldbegrenzung (16), vorzugsweise aus leitfähigem Kreppapier, vom Metallmantel des Massekabels (M) bis unter die Dichtlippe (27) des Isolierkörpers (10) reicht.

9. Übergangsmuffe nach einem der vorhergehenden Ansprüche, dadurch gekennzeichnet, daß der Muffenmantel (1) durch ein Metallrohr, vorzugsweise aus Kupfer, gebildet ist und im Bereich des Massereservoirs (2) eine Einfüllöffnung (36) für die Masse besitzt.

10. Übergangsmuffe nach einem der vorhergehenden Ansprüche, dadurch gekennzeichnet, daß der Metallmantel (8) eines Massekabels (M) über eine erste Flachlitze (18) mit dem Muffenmantel (1) und dieser über eine zweite Flachlitze (18) durch einen zweiten Preßverbinder (20) mit Schirmdrähten (26) eines Kunststoffkabels (K) verbunden ist oder bei Potentialtrennung die zweite Flachlitze (18) durch einen dritten Preßverbinder (21) mit einer ersten isolierten Erdungslitze (23) und die Schirmdrähte (26) durch einen vierten Preßverbinder (22) mit einer zweiten Erdungslitze (24) verbunden ist, und daß vorzugsweise die beiden Erdungslitzen (23, 24) bei Bedarf außerhalb des Kabels wieder miteinander verbindbar sind.

11. Übergangsmuffe nach einem der vorhergehenden Ansprüche, dadurch gekennzeichnet, daß das Dichtungsteil (3) zum Massereservoir (2) hin zwei, vorzugsweise v-förmig zueinander angeordnete Dichtlippen (6, 7) besitzt, von denen eine äußere Dichtlippe (6) auf der Innenseite des Muffenmantels (1) und eine innere Dichtlippe (7) auf dem Metallmantel (8) des Massekabels (M) anliegt und das Dichtungsteil (3) nach außen am Muffenende konisch abgeschrägt ist.

12. Übergangsmuffe nach Anspruch 10, dadurch gekennzeichnet, daß das Dichtungsteil (3) einen Innendurchmesser besitzt, der kleiner als der Außendurchmesser des Metallmantels des Massekabels (M) ist.

13. Übergangsmuffe nach einem der vorhergehenden Ansprüche, dadurch gekennzeichnet, daß die formstabilen Halteringe (4, 13) aus Metall bestehen und die Befestigung am Muffenmantel (1) durch Schrauben (5) erfolgt.

14. Übergangsmuffe nach einem der vorhergehenden Ansprüche, dadurch gekennzeichnet, daß das Dichtteil (3) und/oder der Isolierkörper (10) aus einem elastomeren Material einer Shore-A-Härte zwischen 25 bis 55, vorzugsweise aus einem entsprechenden Silikonkautschuk, hergestellt ist, und daß die Dehnung mindestens des Isolierkörpers (10) zwischen 5 und 30% liegt.

15. Übergangsmuffe nach einem der vorhergehenden Ansprüche, dadurch gekennzeichnet, daß der Muffenmantel (1), der freiliegende Bereich der beiden Dichtungsteile (3, 10) und die Anschlußenden der beiden zu verbindenden Kabel von einem Schrumpfschlauch (29) abgedeckt sind.

16. Anwendung der Übergangsmuffe nach einem der vorhergehenden Ansprüche, dadurch gekennzeichnet, daß zur Verbindung von Mehraderkabeln, insbesondere Dreileiterkabeln, jede der Kabeladern mit einer solchen Übergangsmuffe versehen ist.

## Claims

1. Junction sleeve for the connection of a mass-impregnated cable (M) to a plastic cable (K), in which a sleeve jacket (1) receives at least one correspondingly insulated cable connector (14) and a mass reservoir (2) for the mass-impregnated cable (M), and a tubular prefabricated insulator (10), which consists of elastomeric material and can be pushed onto the cable connector (14), seals off the plastic cable (K) with respect to the mass reservoir (2) and, with a moulded-on insulator seal (27) at one sleeve end, provides a terminating seal to the outside, characterized in that, at the other end of the sleeve, a prefabricated elastomeric sealing part (3), which can be pushed onto the mass-impregnated cable (M), is likewise provided, and a first dimensionally stable retaining ring (4) is moulded into the sealing part (3) and a second dimensionally stable retaining ring (13) is moulded into the insulator (10) and the retaining rings (4, 13) permit a fastening of the parts (3, 10) on the sleeve jacket (1).

2. Junction sleeve according to Claim 1, characterized in that the insulator (10) consisting of elastomeric material has an inside diameter which is respectively less than the outside diameter of the insulation of the mass-impregnated cable (M) on the one hand and of the plastic cable (K) on the other hand.

3. Junction sleeve according to Claim 1 or 2, characterized in that the insulator (10), by spreading of its undersized inside diameter, encloses the cable connector (14) with a press fit and bears with at least one sealing lip (27) against the sleeve jacket (1).

4. Junction sleeve according to one of the preceding claims, characterized in that serving as the cable connector for connecting the conductors of the two cables (M, K) is a first pressure connector (14), preferably with blind-hole bores, which is provided with a pressure connector cross-piece (15) enlarging its outside diameter to such an extent that the said cross-piece effects an intensified terminating seal on the insulator (10).

5. Junction sleeve according to one of the preceding claims, characterized in that there is integrated in the insulator (10) a smoothing electrode (11), consisting of conductive material, and preferably also a control funnel (12), and the smoothing electrode (11), resting on the ends of the insulation (9, 34) of the two cable conductors, makes contact with the first pressure connector (14) in a covering manner.

6. Junction sleeve according to one of the preceding claims, characterized in that the insulator (10) ends towards the mass-impregnated cable (M) on the exposed paper insulation (34) approximately mid-way between a first cut-back edge (30) of a field limitation (16) of the mass-impregnated cable (M) and a second cut-back edge (31), formed at the end of the paper insulation (34) of the mass-impregnated cable (M), and the seepage region for subsequent impregnation lies between the first cut-back edge (30) and the insulator (10).

7. Junction sleeve according to one of the preceding claims, characterized in that the end of the insulator (10) is conically tapered and a corresponding cone is produced by wrapping on a paper serving (33), preferably having a width of between 20 mm and 100 mm.

8. Junction sleeve according to one of the preceding claims, characterized in that the outside diameter of the insulator (10) up to its sealing lip (27) is significantly less than the inside diameter of the sleeve jacket (1), with the result that the mass reservoir (2) can extend as far as into this region, and in that an outer field limitation (16), preferably of conductive crêpe paper, reaches from the metal jacket of the mass-impregnated cable (M) as far as under the sealing lip (27) of the insulator (10).

9. Junction sleeve according to one of the preceding claims, characterized in that the sleeve jacket (1) is formed by a metal tube, preferably of copper, and has in the region of the mass reservoir (2) a filling opening (36) for the mass.

10. Junction sleeve according to one of the preceding claims, characterized in that the metal jacket (8) of a mass-impregnated cable (M) is connected via a first flat stranded-wire (18 [sic]) to the sleeve jacket (1) and the latter is connected via a second flat stranded wire (18) by a second pressure connector (20) to screening wires (26) of a plastic cable (K) or, with electrical isolation, the second flat stranded wire (18) is connected by a third pressure connector (21) to a first insulated earthing stranded wire (23) and the screening wires (26) are connected by a fourth pressure connector (22) to a second earthing stranded wire (24), and in that the two earthing stranded wires (23, 24) can preferably be connected to each other again outside the cable, as required.

11. Junction sleeve according to one of the preceding claims, characterized in that the sealing part (3) has towards the mass reservoir (2) two sealing lips (6, 7), which are preferably arranged in the shape of a v with respect to each other and of which an outer sealing lip (6) bears on the inside of the sleeve jacket (1) and an inner sealing lip (7) bears on the metal jacket (8) of the mass-impregnated cable (M), and the sealing part (3) is conically tapered outwards at the end of the sleeve.

12. Junction sleeve according to Claim 10, characterized in that the sealing part (3) has an inside diameter which is less than the outside diameter of the metal jacket of the mass-impregnated cable (M).

13. Junction sleeve according to one of the preceding claims, characterized in that the dimensionally stable retaining rings (4, 13) consist of metal and the fastening on the sleeve jacket (1) takes place by screws (5).

14. Junction sleeve according to one of the preceding claims, characterized in that the sealing part (3) and/or the insulator (10) is [sic] produced from an elastomeric material of a Shore A hardness of between 25 to [sic] 55, preferably from a corresponding silicone rubber, and in that the elongation, at least of the insulator (10), lies between 5 and 30%.

15. Junction sleeve according to one of the preceding claims, characterized in that the sleeve jacket (1), the exposed region of the two sealing parts (3, 10) and the connecting ends of the two cables to be connected are covered by a shrink-on tube (29).

16. Use of the junction sleeve according to one of the preceding claims, characterized in that, for the connection of multiconductor cables, in particular three-conductor cables, each of the cable conductors is provided which such a junction sleeve.

## Revendications

1. Manchon de raccordement pour la liaison d'un câble imprégné (M) et d'un câble en matière synthétique (K), dans le cas duquel une enveloppe de manchon (1) loge au moins un raccord de câble (4) isolé de façon correspondante et un réservoir de masse d'imprégnation (2) pour le câble imprégné (M) et dans lequel un corps isolant (10) préfabriqué, constitué en une matière élastomère, en forme de tuyau et pouvant être glissé sur le raccord de câble (14) rend étanche le câble de matière synthétique (K) par rapport au réservoir de masse (2) et pourvoit à une étanchéité, à une extrémité du manchon, avec un joint d'étanchéité de corps isolant (27) façonné, caractérisé en ce qu'il est prévu également, à l'autre extrémité du manchon, un élément d'étanchéité (3) en élastomère, préfabriqué et pouvant être glissé sur le câble imprégné (M), en ce qu'une première bague d'arrêt (4) de forme stable est coulée dans l'élément d'étanchéité (3) et une seconde bague d'arrêt (13) de forme stable est coulée dans le corps isolant (10) et en ce que les bagues d'arrêt (4, 13) permettent une fixation des éléments (3, 10) à l'enveloppe de manchon.

2. Manchon de raccordement suivant la revendication 1, caractérisé en ce que le corps isolant (10) constitué en matière élastomère présente un diamètre interne qui est chaque fois plus petit que le diamètre externe de l'isolant du câble imprégné (M) d'un côté et du câble de matière synthétique (K) de l'autre côté.

3. Manchon de raccordement suivant la revendication 1 ou 2, caractérisé en ce que le corps isolant (10) entoure, dans un ajustage serré, le raccord de câble (14) par suite d'un agrandissement de son diamètre interne de moindre dimension et est appliqué sur l'enveloppe de manchon (1) par au moins une lèvre d'étanchéité (27).

4. Manchon de raccordement suivant l'une des revendications précédentes, caractérisé en ce qu'un premier raccord à serrer (14), comportant de préférence un trou borgne et muni d'une âme de raccord à serrer (15) qui s'agrandit par son diamètre externe jusqu'à ce que celle-ci réalise sur le corps isolant une étanchéité renforcée, sert de raccord de câble pour la liaison des conducteurs des deux câbles (M, K).

5. Manchon de raccordement suivant l'une des revendications précédentes, caractérisé en ce qu'une électrode de filtrage (11), constituée en une matière conductrice, et de préférence également un entonnoir de commande sont intégrés dans le corps isolant (10) et en ce que l'électrode de filtrage (11) entre en contact de façon à être appliquée sur les extrémités de l'isolant (9, 34) des deux conducteurs de câble et de façon à recouvrir le premier raccord à serrer (14).

6. Manchon de raccordement suivant l'une des revendications précédentes, caractérisé en ce que le corps isolant (10) se termine au câble imprégné (M), à l'isolant en papier (34) mis à nu, approximativement au milieu entre une première arête de découpe (30) d'un moyen de limitation de champ (16) du câble imprégné (M) et une seconde arête de découpe (31) formée à l'extrémité de l'isolant en papier (34) du câble imprégné (M) et est situé entre la première arête de découpe (30) et le corps isolant (10) de la zone de saturation pour l'imprégnation ultérieure.

7. Manchon de raccordement suivant l'une des revendications précédentes, caractérisé en ce que l'extrémité du corps isolant (10) est chanfreinée de façon conique et en ce qu'il y a un cône correspondant, par suite d'un enroulement d'un rouleau de papier (30), de préférence d'une largeur entre 20 mm et 100 mm.

8. Manchon de raccordement suivant l'une des revendications précédentes, caractérisé en ce que le diamètre externe du corps isolant (10), jusqu'à sa lèvre d'étanchéité (27), est inférieur au diamètre interne de l'enveloppe de manchon (1), de sorte que le réservoir de masse (2) peut s'étendre jusque dans cette zone et de façon qu'un moyen de limitation externe de champ (16), de préférence en papier crêpe conducteur, va de l'enveloppe métallique du câble imprégné (M) jusqu'en dessous de la lèvre d'étanchéité (27) du corps isolant (10).

9. Manchon de raccordement suivant l'une des revendications précédentes, caractérisé en ce que l'enveloppe de manchon (1) est formée par un tube métallique, de préférence en cuivre, et comporte pour la masse, dans la zone du réservoir de masse (2) un orifice de remplissage (36).

10. Manchon de raccordement suivant l'une des revendications précédentes, caractérisé en ce que l'enveloppe métallique (8) d'un câble imprégné (M) est reliée par un premier toron plat (18) à l'enveloppe de manchon (1) et celle-ci est reliée par un second toron plat (18), à travers un second raccord à serrer (20) à des fils d'écran (26) d'un câble en matière synthétique (K) ou bien, dans le cas d'une séparation de potentiel, le second toron plat (18) est relié à travers un troisième raccord à serrer (21) à un premier toron isolé (23) de mise à la terre et les fils d'écran (26) sont reliés par un quatrième raccord à serrer (22) à un second toron de mise à la terre (24) et en ce que de préférence les deux torons de mise à la terre (23, 24) peuvent être reliés l'un à l'autre à nouveau, en cas de besoin, à l'extérieur du câble.

11. Manchon de raccordement suivant l'une des revendications précédentes, caractérisé en ce que l'élément d'étanchéité (3) comporte jusqu'au réservoir de masse (2) deux lèvres d'étanchéité (6, 7) qui sont agencées de préférence en une forme de V l'une par rapport à l'autre et dont une lèvre d'étanchéité externe (6) est appliquée sur le côté interne de l'enveloppe de manchon (1) et une lèvre d'étanchéité interne (7) est appliquée sur l'enveloppe métallique (8) du câble imprégné (M) et en ce que l'élément d'étanchéité (3) est chanfreiné de façon conique vers l'extérieur à l'extrémité du manchon.

12. Manchon de raccordement suivant la revendication 10, caractérisé en ce que l'élément d'étanchéité (3) comporte un diamètre interne qui est plus petit que le diamètre externe de l'enveloppe métallique du câble imprégné (M).

13. Manchon de raccordement suivant l'une des revendications précédentes, caractérisé en ce que les bagues d'arrêt (4, 13) de forme stable sont constituées de métal et en ce que la fixation à l'enveloppe de manchon (1) est effectuée par des vis (5).

14. Manchon de raccordement suivant l'une des revendications précédentes, caractérisé en ce que l'élément d'étanchéité (3) et/ou le corps isolant (10) sont fabriqués en un matière élastomère d'une dureté Shore A entre 25 et 55, de préférence en un caoutchouc de silicone correspondant, et en ce que l'allongement d'au moins le corps isolant (10) est compris entre 5 et 30 %.

15. Manchon de raccordement suivant l'une des revendications précédentes, caractérisé en ce que l'enveloppe de manchon (1), la zone libre des deux éléments d'étanchéité (3, 10) et les extrémités de raccordement des deux câbles à relier sont recouvertes par une gaine rétractable (29).

16. Utilisation du manchon de raccordement suivant l'une des revendications précédentes, caractérisée en ce que pour la liaison de câbles à plusieurs conducteurs, en particulier de câbles à trois conducteurs, chacun des conducteurs de câble est muni d'un manchon de raccordement de ce genre.
